**Europäisches Patentamt**

(19) **European Patent Office**

**Office européen des brevets**

(11) Numéro de publication: **0 291 431 B1**

(12) **FASCICULE DE BREVET EUROPEEN**

(45) Date de publication du fascicule du brevet:
**19.09.90**

(51) Int. Cl.⁵: **A01G 3/03, B26B 15/00**

(21) Numéro de dépôt: **88430009.6**

(22) Date de dépôt: **27.04.88**

(54) Outil électrique portable à asservissement en position.

(30) Priorité: **28.04.87 FR 8706141**

(43) Date de publication de la demande:
**17.11.88 Bulletin 88/46**

(45) Mention de la délivrance du brevet:
**19.09.90 Bulletin 90/38**

(84) Etats contractants désignés:
**AT BE CH DE ES FR GB GR IT LI LU NL SE**

(56) Documents cités:
**DE-A- 3 524 443**
**DE-C- 3 446 802**

(73) Titulaire: **ETABLISSEMENTS PELLENC ET MOTTE (Société Anonyme), Quartier Notre Dame Route de Villelaure, F-84120 Pertuis(FR)**

(72) Inventeur: **Pellenc, Roger, Quartier de la Piscine, F-84120 Pertuis(FR)**

(74) Mandataire: **Marek, Pierre, 28 & 32 rue de la Loge, F-13002 Marseille(FR)**

ACTORUM AG

## Description

La présente invention concerne un outil électrique portable à asservissement en position, tel que, par exemple, cisaille à tôle, ou sécateur utilisable en agriculture, arboriculture, viticulture ou horticulture, pour travaux de taille et/ou de récolte.

On connaît, dans le domaine agricole, des sécateurs électriques (Modèle d'Utilité allemand NO G 86 14 677.7, Demande de Brevet français NO 2 584 566) comportant un organe actif mobile constitué par une lame mobile disposée à l'extrémité antérieure d'un corps creux dont une partie forme la poignée desdits sécateurs et à l'intérieur duquel sont logés un moteur électrique et un réducteur de vitesse dont l'arbre de sortie est relié à ladite lame mobile par l'intermédiaire d'un système de transmission comportant une pièce mobile d'entraînement assurant le pivotement de cette dernière en position de fermeture; de tels sécateurs étant alimentés en énergie électrique au moyen d'une batterie d'accumulateurs portable. Ces sécateurs électriques sont, en outre, munis d'un bouton-poussoir de commande dont l'enfoncement permet d'actionner un interrupteur placé sur le circuit d'alimentation du moteur électrique dont la mise en marche assure le pivotement de la lame mobile desdits sécateurs en position de fermeture, et dont le relâchement assure l'arrêt dudit moteur et permet le rappel de ladite lame en position d'ouverture, généralement sous l'action d'un ressort.

Un très important inconvénient de ces sécateurs électriques réside dans le fait que le système d'entraînement de leur lame mobile, est consitué par un dispositif à came et qu'un tel dispositif ne parmet pas la réouverture des lames avant de les avoir complètement fermées, de sorte qu'il est très difficile de dégager le sécateur lorsque ses lames se trouvent coincées sur un bois trop gros.

Selon l'invention, cet inconvénient est supprimé grâce à une construction suivant laquelle la pièce mobile d'entraînement de l'organe actif mobile de l'outil est constituée par l'écrou d'un système vis-écrou à billes accouplé audit organe actif, par exemple par l'intermédiaire de biellettes.

Dans l'application avantageuse aux sécateurs utilisables pour les travaux de taille et/ou de récolte, cette caractéristique de l'invention permet d'obtenir un appareil très puissant ayant un très bon rendement. Le moteur électrique dudit appareil peut tourner à des vitesses élevées (de l'ordre de 7000 tours/minute). La pièce mobile d'entraînement a un faible moment d'inertie, ce qui autorise des variations de vitesses importantes et favorise les changements de sens de rotation du moteur, avec une faible consommation d'énergie augmentant l'autonomie de l'appareil. On obtient également un déplacement très précis de la pièce mobile d'entraînement permettant une maîtrise parfaite de la coupe.

En raison de la simplicité de sa construction, l'outil électrique portatif selon l'invention est très léger et peu encombrant.

Un autre inconvénient des sécateurs électriques connus découle du fait qu'il est pas possible de synchroniser la vitesse et l'amplitude des mouvements de pivotement de la lame mobile avec la vitesse et l'amplitude des mouvements de l'organe de commande (bouton-poussoir), de sorte que l'enfoncement ou le relâchement de ce dernier, provoque la fermeture ou l'ouverture incontrôlée et plus ou moins brusque des lames.

Outre que celà constitue une source de danger, car il est pratiquement impossible de contrôler le rabattement de la lame mobile en direction de la lame fixe lorsqu'on enfonce le bouton-pressoir, il en découle également une insuffisance notable, compte tenu du fait qu'il n'est virtuellement pas possible d'immobiliser la lame mobile dans une position intermédiaire précise, alors qu'il est souvent souhaitable de pouvoir régler l'écartement des lames pour pénétrer dans une végétation relativement dense, afin de limiter les possibilités d'accrochage ou de permettre le sectionnement du rameau ou de la branche désirée.

Un autre but de la présente invention est aussi de remédier à ces inconvénients ou insuffisances.

Son objet permet, en effet, de faire concorder la vitesse et l'amplitude des pivotements de la ou des lames mobiles avec la vitesse et l'amplitude des mouvements de l'organe de commande (gâchette) et, par conséquent, d'immobiliser la ou lesdites lames dans une position intermédiaire quelconque entre l'ouverture maximum et la fermeture, et vice-versa.

L'outil électrique portable tel que sécateur électrique selon l'invention est donc encore remarquable par le fait que la gâchette et le dispositif de commande électrique ou électronique actionné par celle-ci sont assujettis à la pièce mobile d'entraînement de l'organe actif mobile dudit outil dont elles suivent les déplacements, et peuvent occuper différentes positions relatives, de sorte que tout mouvement autorisé de la gâchette dans un sens ou dans l'autre, à partir d'une position neutre quelconque, provoque l'actionnement dudit dispositif de commande assurant la mise en marche du moteur électrique et le déplacement de l'ensemble: une pièce mobile d'entraînement — gâchette — dispositif de commande qui peut ensuite se replacer automatiquement dans une position neutre lorsque la gâchette est immobilisée par les butées de fin de course ou manuellement.

Un avantage obtenu grâce à l'invention est que l'outil tel que sécateur ou autre outil de coupe bénéficie d'une progressivité totale permettant de commander et de moduler avec une grande précision, directement avec la gâchette, la vitesse de fermeture des lames qu'il est possible de maintenir ouvertes dans n'importe quelle position intermédiaire entre leur ouverture maximum et leur fermeture.

On obtient ainsi un appareil bénéficiant de la puissance des matériels électriques et dont la commande se rapproche du geste d'actionnement des sécateurs à main traditionnels.

Un autre avantage offert par l'invention est que l'outil n'a pas besoin de systèmes électriques ou électroniques auxiliaires et supplémentaires de fin de course, ce qui permet de simplifier sa construction et de limiter le nombre de capteurs électriques ou électroniques; en effet, la gâchette et le dispositif de commande assurent également la fin de course dans les deux sens.

Les buts, caractéristiques et avantages ci-dessus et d'autres encore, ressortiront mieux de la description qui suit et des dessins annexés dans lesquels:

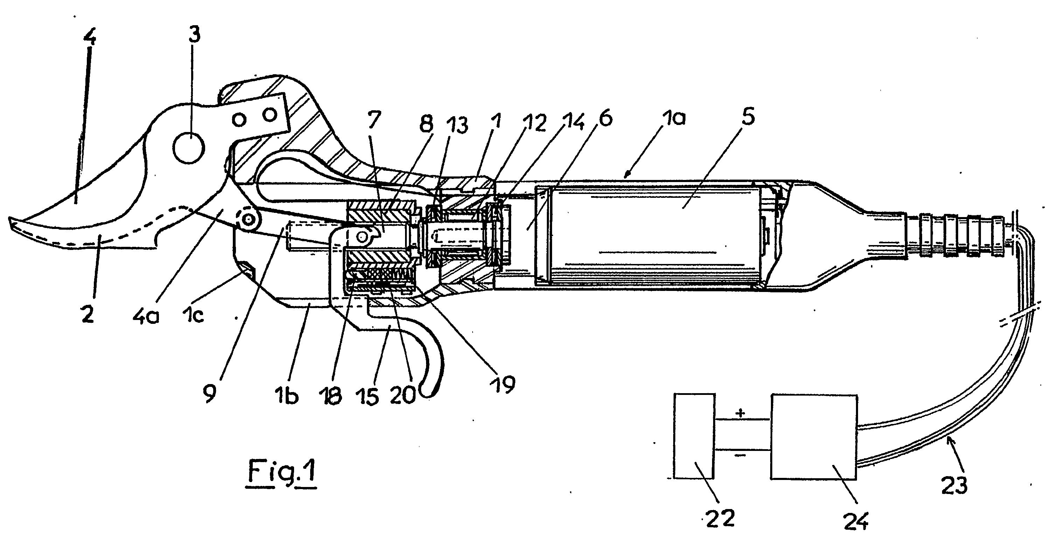

La figure 1 est une vue en coupe axiale d'un sécateur électrique exécuté selon l'invention.

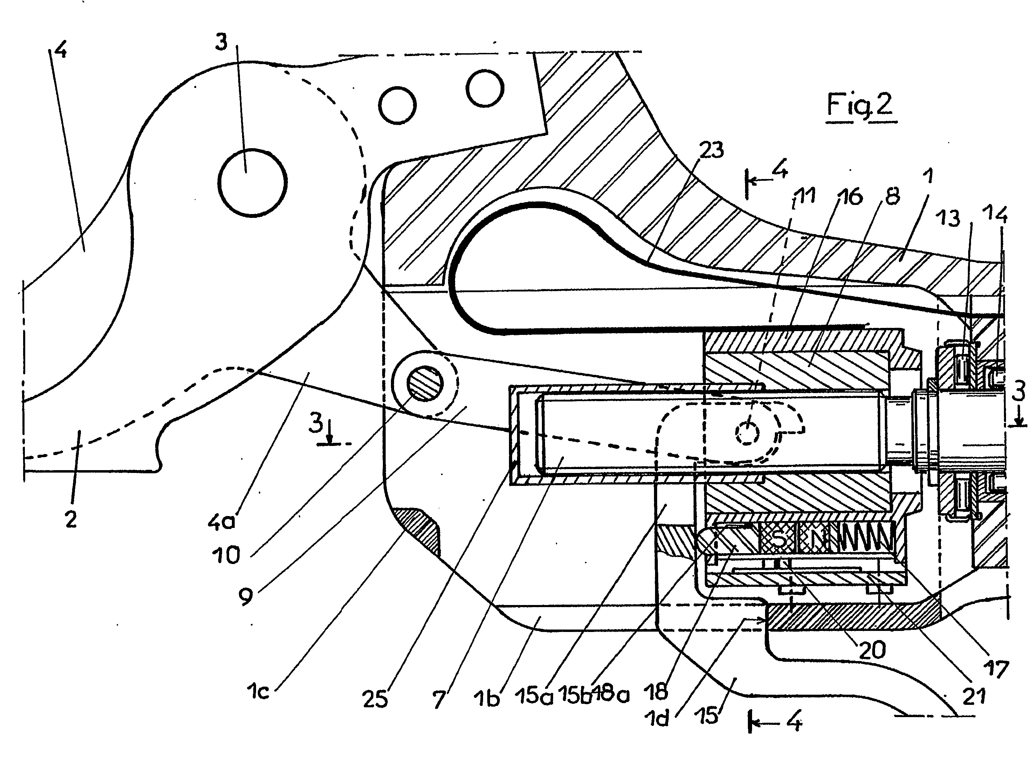

La figure 2 est une vue en coupe axiale et à plus grande échelle de la partie avant de ce sécateur.

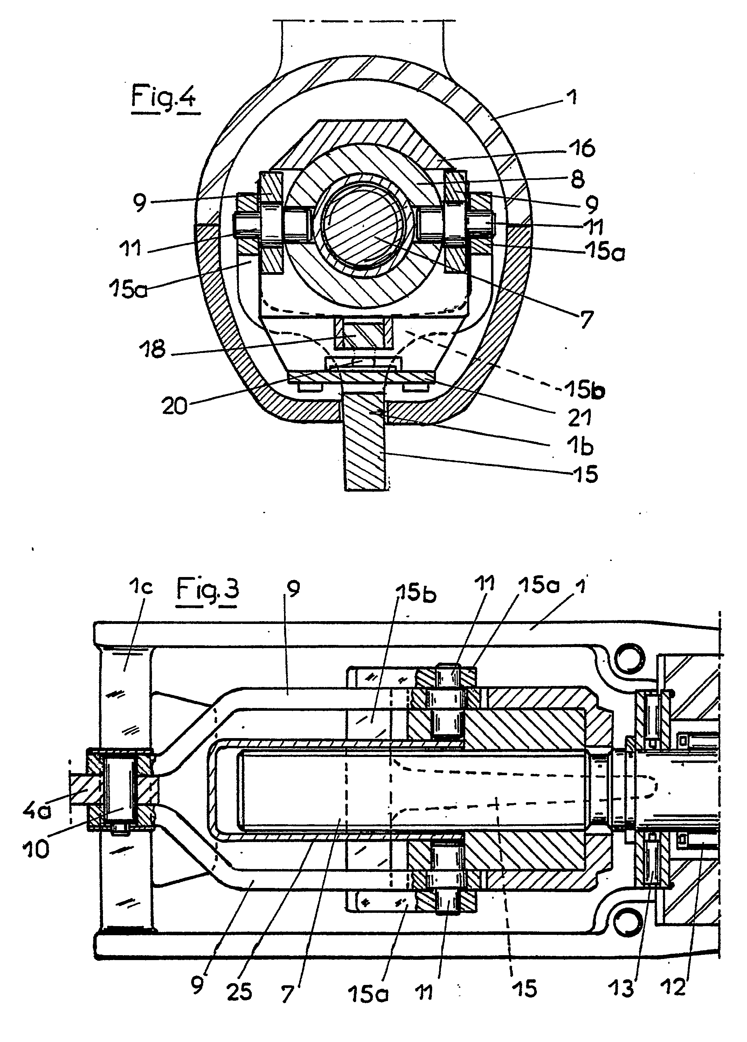

La figure 3 est une vue en coupe longitudinale selon la ligne 3–3 de la figure 2.

La figure 4 est une vue en coupe transversale selon la ligne 4–4 de la figure 2.

La figure 5 est une vue en coupe axiale de la partie avant du sécateur représenté dans une position dynamique permettant la réouverture des lames.

La figure 6 est une vue comparable à la figure 5, montrant le sécateur dans la position statique de complète ouverture des lames.

La figure 7 est une vue comparable à la figure 5, montrant le sécateur dans la position statique de fermeture des lames.

La figure 8 est une vue comparable à la figure 5, montrant l'immobilisation de la lame mobile du sécateur dans une position intermédiaire.

Les figures 9 et 10 sont des vues de détail illustrant le fonctionnement du dispositif électrique de commande.

On se réfère auxdits dessins pour décrire un exemple de réalisation intéressant, quoique nullement limitatif, de l'outil électrique portable à asservissement en position selon l'invention.

Celle-ci peut être appliquée à la réalisation d'outils portatifs divers tels que, par exemple, sécateurs, cisailles pour découper les tôles de caisses de véhicules accidentés, pinces de serrage, etc., comportant une tête de travail pourvue d'au moins un organe actif mobile.

On se reporte, dans l'exposé qui suit, à une application particulièrement intéressante de l'invention à la réalisation d'un sécateur utilisable pour les travaux de taille et/ou de récolte, en agriculture, arboriculture, viticulture ou horticulture, dans lesquels la tête de travail est constituée par une tête de coupe dont l'organe actif mobile est l'une des deux lames de coupe.

Ce sécateur comprend un corps évidé 1 dont la partie arrière 1a est conformée pour servir de poignée et sur la partie antérieure duquel est fixé le crochet ou lame fixe 2 de la tête de coupe. Ce corps est, par exemple, exécuté en deux parties assemblées par vissage, suivant un plan longitudinal. Sur le crochet 2, est articulée, au moyen d'un axe 3, la lame mobile 4 de ladite tête de coupe.

Dans la partie arrière 1a du corps est installé un moteur électrique à courant continu 5 accouplé à un réducteur 6 disposé à l'avant dudit moteur.

La sortie du réducteur est accouplée à un système vis-écrou à billes connu en soi et comprenant une vis à billes 7 mobile en rotation et immobilisée en translation et un écrou à billes 8 mobile en translation et immobilisé en rotation.

La vis tournante 7 est accouplée à la sortie du réducteur 6, tandis que l'écrou 8 mobile axialement est relié, au moyen d'un couple de biellettes 9, à la lame mobile 4. Plus précisément, ces biellettes sont disposées latéralement de chaque côté de l'écrou et sont assujetties, au moyen d'axes d'articulation 10 et 11, à un prolongement ou levier 4a que présente la lame 4 et au corps dudit écrou, respectivement.

De préférence, un dispositif permettant de décharger le moteur et le réducteur des efforts parasites dûs à la coupe, est disposé autour de la partie arrière de la vis 7. Ce dispositif comprend, par exemple, d'une part, un roulement constitué, de préférence, par un roulement à aiguilles 12 permettant de recentrer la vis 7 et de reprendre les efforts radiaux supportés par celle-ci et, d'autre part, des butées telles que, par exemple, des butées à aiguilles 13 et 14 disposées en avant et en arrière dudit roulement à aiguilles et assurant la reprise des efforts axiaux lors de l'ouverture et, surtout, lors de la fermeture des lames.

A sa partie avant, l'écrou à billes 8 porte un petit capot tubulaire 25 entourant la portion antérieure de la vis à billes 7 et assurant la protection de celle-ci.

Sur l'écrou 8 est montée, avec une aptitude de pivotement, une gâchette 15 permettant la commande de l'ouverture et de la fermeture des lames.

Selon l'exemple illustré, cette gâchette comporte une partie supérieure en forme de fourchette comprenant deux branches 15a au moyen desquelles elle est fixée sur les axes d'articulation 11 portés par l'écrou mobile 8. Elle comporte, d'autre part, une tête d'appui 15b disposée au point de rencontre de ses branches 15a.

La gachette 15 peut pivoter par rapport à l'écrou mobile 8, tout en se déplaçant avec celui-ci, parallèlement à la vis 7.

Dans sa partie avant, le corps 1 comporte une ouverture longitudinale 1b permettant le passage, le pivotement et la translation de la gâchette, cette ouverture étant limitée, à l'avant, par une barrette transversale 1c constituant une butée contre laquelle peut venir en appui ladite gâchette ; cette barrette pouvant être formée d'une seule pièce avec ledit corps ou rapportée sur celui-ci, par soudure, vissage ou autrement.

D'autre part, le bord postérieur 1d de l'ouverture 1b constitue également une butée limitant la course de recul de la gâchette 15 lorsqu'elle est actionnée manuellement.

On a illustré des butées de fin de course fixes 1c, 1d, mais ces butées pourraient aussi être réglables moyennant une simple adaptation mécanique.

Selon l'invention, le dispositif de commande électrique actionné par la gâchette est également assujetti à l'écrou mobile 8 et se déplace avec celui-ci.

Selon le mode d'exécution avantageux illustré, l'écrou proprement dit 8 est installé fixement dans un carter mobile 16 et, dans la partie inférieure de ce carter est aménagée une chambre 17 orientée parallèlement à l'axe longitudinal du sécateur. Dans cette chambre, est logé un tiroir de commande magnétique 18 et un ressort de compression 19 tendant à repousser ledit tiroir de commande en direction de la gâchette 15, à travers une ouverture réservée dans la paroi avant de ladite chambre. L'extrémité de la portion émergeante du tiroir de commande 18 se trouve ainsi en permanence en contact avec la tête 15b de la gâchette 15 qui n'est assujettie par aucune liaison mécanique audit tiroir de commande.

Le tiroir de commande 18 est muni d'au moins un aimant SN, et il présente un épaulement 18a formant une butée qui limite l'amplitude de sa course en direction de la gâchette.

De manière très intéressante, le tiroir magnétique 18 est muni de deux aimants S, N, inversement orientés et dont les champs magnétiques sont perpendiculaires au capteur décrit ci-après. Un faible espace constituant le centre 0 de l'ensemble magnétique S-N est, de préférence, ménagé entre les deux aimants S, N, placés tête-bêche.

Au-dessous de la chambre 17 et du tiroir de commande 18, est disposé un capteur 20 au-dessus duquel peuvent se déplacer les aimants S, N portés par ledit tiroir. De manière avantageuse, ce capteur peut être constitué par un capteur à effet Hall, connu en soi, permettant de transformer une valeur de champ magnétique en une tension proportionnelle et ceci sans contact matériel.

On souligne toutefois qu'il est aussi possible, pour détecter la position du tiroir de commande 18 ou de la gâchette 15, d'utiliser d'autres types de capteurs tels que capteur linéaire potentiométrique, capteur linéaire optique, capteur capacitif, transformateur différentiel, capteur d'effort piezo-électrique ou à jauge de contrainte, etc., en fonction de l'agencement du dispositif de commande électrique ou de la gâchette.

Le capteur 20 est porté par une plaque 21 fixée par vissage ou autrement au carter 16 de l'écrou à billes 8.

Le moteur électrique 5 de l'appareil peut être alimenté par un générateur de courant continu portable. Ce générateur d'électricité est, par exemple, constitué par une batterie d'accumulateurs 22 portative, montée sur un ceinturon ou sur une armature à bretelles ; une telle batterie comprenant des accumulateurs rechargeables et à grande capacité, assurant une large autonomie de fonctionnement.

La batterie 22 est reliée au moteur 5 par un câble électrique souple 23.

Sur le circuit d'alimentation du moteur, est disposée une carte électronique de commande 24 également reliée par l'intermédiaire d'un câble souple au capteur 20. Cette carte électronique de pilotage de moteur à courant continu connue en soi assure le pilotage du moteur 5, en fonction de la position de la gâchette 15 et du tiroir de commande 18.

Le sécateur précédemment décrit fonctionne de la manière suivante :

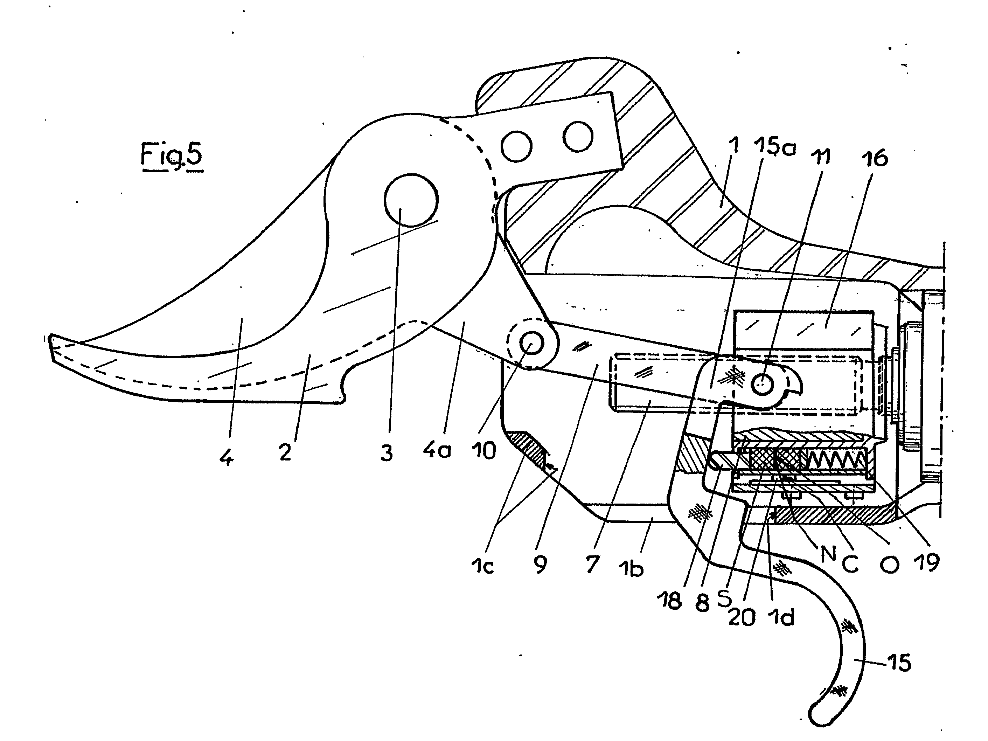

Lorsqu'il n'est pas utilisé, les lames sont fermées et l'ensemble mobile constitué par l'écrou 8, la gâchette 15 et le dispositif de commande électrique 18-20, se trouve en position de recul ; ladite gâchette est basculée vers l'avant sous la poussée du ressort 19 transmise par le tiroir de commande 18, et le N de l'aimant SN ou du couple d'aimants SN se trouve disposé face au capteur 20 (figure 5).

Le passage du courant électrique en direction de l'appareil est commandé par un interrupteur de sécurité placé sur le boîtier contenant la ou les batteries 22.

Lorsque l'appareil est alimenté, le moteur 5 se met en marche et entraîne la vis 7 en rotation, par l'intermédiaire du réducteur 6, dans un sens assurant la translation de l'ensemble : écrou 8 - gâchette 15 - dispositif de commande électrique 18-20, en direction de l'avant, et le pivotement en position d'ouverture de la lame mobile 4 reliée audit ensemble par l'intermédiaire des biellettes 9, jusqu'à ce que la gâchette entre en contact avec la butée avant 1c.

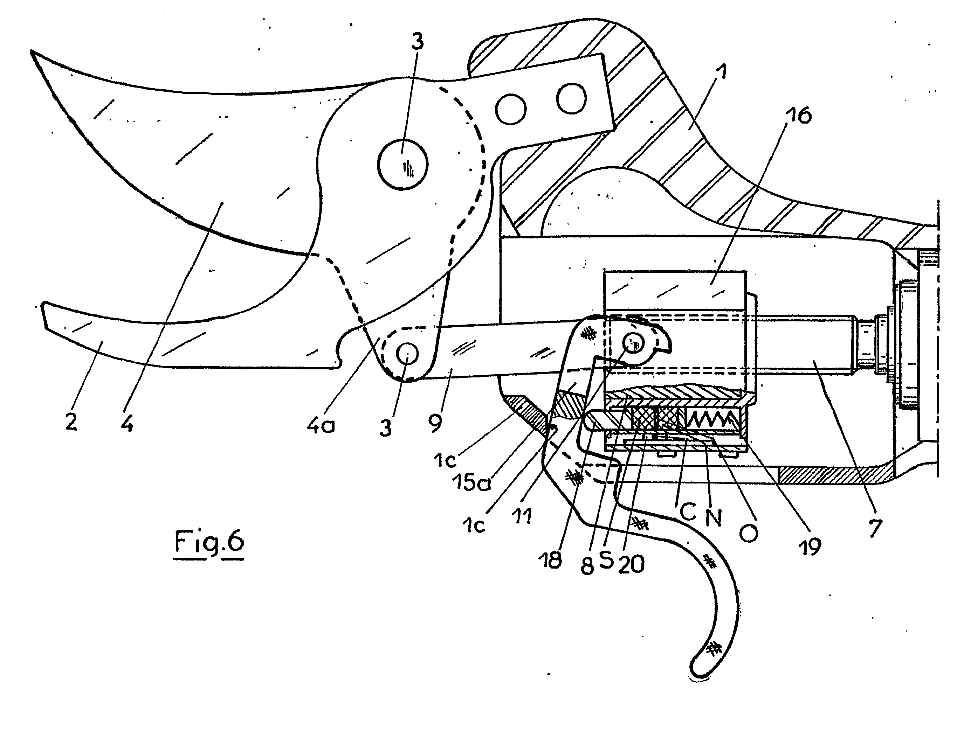

La gâchette 15 étant arrêtée par la butée 1c, l'écrou 8 poursuit sa course vers l'avant, ce qui provoque l'enfoncement partiel du tiroir de commande 18 appuyé contre ladite gâchette. Cet enfoncement permet de commander, par l'intermédiaire du capteur 20 et de la carte électronique 24, d'abord la décélération du moteur 5, puis l'arrêt de celui-ci lorsque le centre 0 de l'aimant SN ou du couple d'aimants S-N se trouve placé face au centre C dudit capteur (figure 6). Dans cette situation, les lames 2 et 4 du sécateur se trouvent en position d'ouverture complète.

Pour obtenir la fermeture des lames et l'action de coupe, on appuie sur la gâchette 15, ce qui entraîne l'enfoncement complet du tiroir de commande 18 et le placement du S de l'aimant SN ou du couple d'aimants S-N face au centre C du capteur 20.

Le moteur 5 piloté par le capteur et la carte électronique se remet en marche en sens contraire et entraîne la vis 7 en rotation dans un sens inverse assurant la translation de l'ensemble : écrou 8 -gâchette 15 - dispositif de commande électrique 18-20, en direction de l'arrière ; le recul dudit ensemble entraînant le pivotement de la lame mobile 4 en position de fermeture.

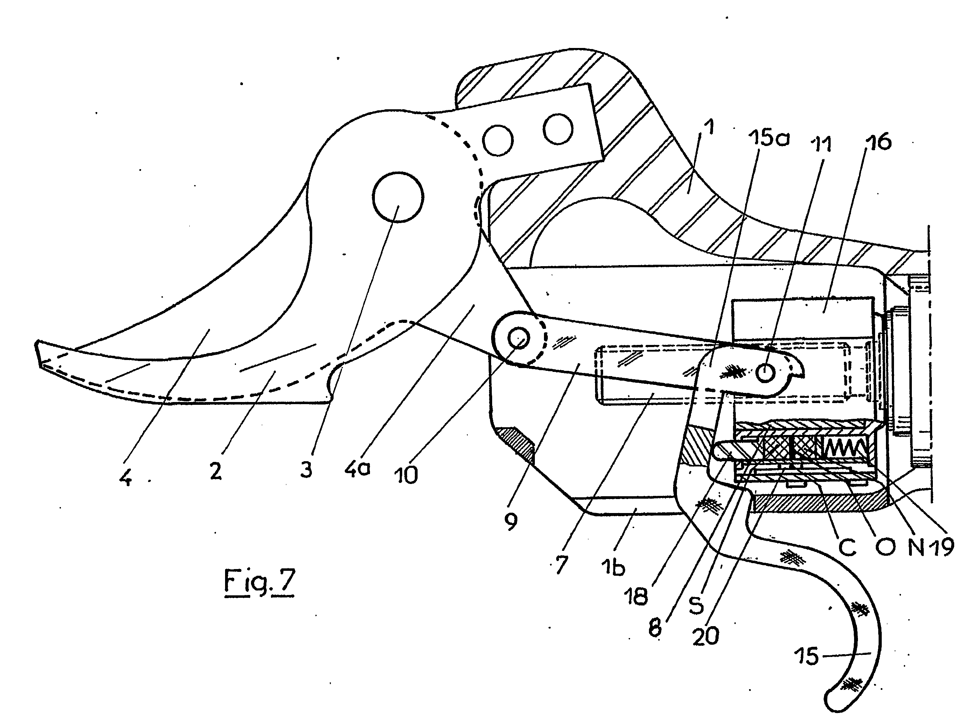

Lorsque la gâchette 15 entre en contact avec le bord postérieur 1d de l'ouverture 1b, sa translation est arrêtée mais l'écrou 8 poursuit sa course de recul, ce qui permet un déplacement vers l'avant du tiroir de commande, sous la poussée du ressort 19. Ce déplacement permet de commander, par l'intermédiaire du capteur 20 et de la carte électronique 24, d'abord la décélération du moteur 5, puis l'arrêt de ce dernier lorsque le centre 0 de l'aimant SN ou du couple d'aimants S-N se trouve placé face au centre C dudit capteur. Dans cette situation, les lames 2 et 4 de l'appareil se trouvent en position de fermeture complète (figure 7).

On comprend que la tête de coupe et le dispositif de transformation de mouvement et de transmission, sont agencés de manière à permettre une coupe des bois par un mouvement de traction.

Lorsqu'on relâche la gâchette 15, celle-ci se trouve pivotée vers l'avant, sous l'action du ressort 19 transmise par le tiroir de commande 18, et l'ensemble mobile de commande se trouve replacé dans la position illustrée à la figure 5 et permettant la réouverture des lames.

On observe que les mouvements de la lame mobile 4 sont totalement asservis aux mouvements de la gâchette, ce qui assure une progressivité totale lors de l'ouverture et, surtout, lors de la fermeture et de la coupe.

D'autre part, la lame mobile 4 peut être immobilisée avec précision dans une position intermédiaire quelconque, aussi bien lors de la phase d'ouverture que lors de la phase de fermeture.

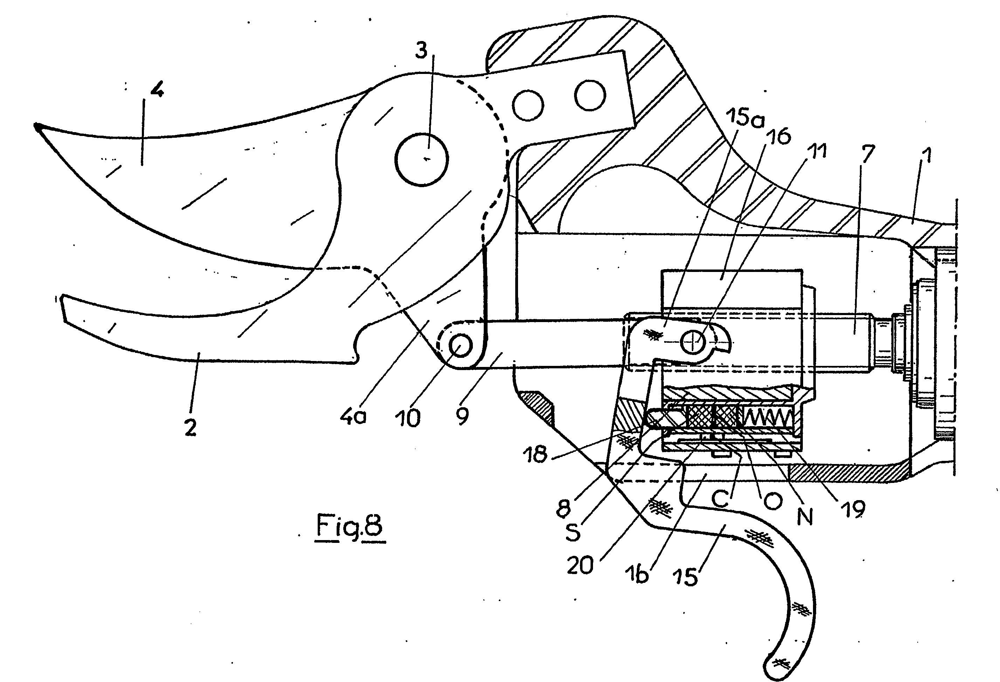

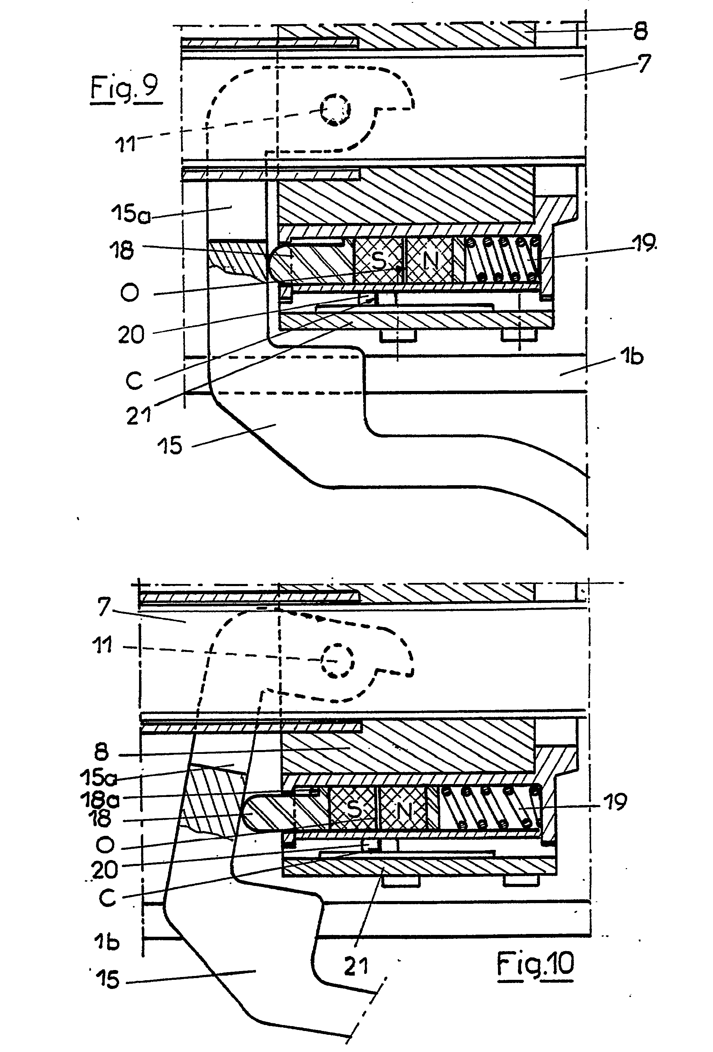

Il suffit, en effet, pour celà, d'immobiliser manuellement la gâchette 15 dans une position intermédiaire (figure 9). Dans ce cas, l'écrou 8 poursuit sa course vers l'avant ou vers l'arrière, ce qui entraîne le recul ou l'avance du tiroir de commande 18 appuyé contre la gâchette, ce déplacement dudit tiroir permettant de commander, par l'intermédiaire du capteur 20 et de la carte électronique 24, d'abord la décélération du moteur 5, puis l'arrêt de celui-ci lorsque le centre 0 de l'aimant SN ou du couple d'aimants S-N se trouve placé face au centre C dudit capteur (figure 10). L'arrêt du moteur entraîne l'immobilisation de la lame mobile dans une position intermédiaire qui est fonction de la position dans laquelle la gâchette a été immobilisée (figures 8 et 10).

Si on exerce, après cette immobilisation momentanée, une pression supplémentaire sur la gâchette, l'ensemble : écrou 8 - gâchette 15 -dispositif de commande électrique 18-20 repart vers l'arrière, tandis que si on relâche la gâchette, ledit ensemble repart vers l'avant.

La carte électronique 24 qui assure le pilotage du moteur permet d'engendrer des vitesses de rotation de ce dernier proportionnelles aux écarts enregistrés entre les points 0 et C de l'aimant SN et du capteur 20, respectivement, dans un sens ou dans l'autre, les variations de ces écarts se traduisant par des accélérations (lorsque l'écart augmente) et des décélérations ou freinage (lorsque l'écart diminue) dudit moteur dont les arrêts et remises en marche successifs ne provoquent aucune secousse désagréable.

Les variations de ces écarts se traduisent par des variations de champ magnétique et, par conséquent, par des variations de tension à la sortie du capteur à effet Hall, variations dont la carte électronique assure le traitement et la gestion pour les transformer en accélérations ou décélérations. La carte électronique a également pour fonction d'assurer la protection électrique du moteur, en contrôlant et limitant l'intensité maximum du courant électrique entrant dans ledit moteur, à une valeur prédéterminée.

Ce mode de pilotage du moteur contribue au parfait asservissement de l'organe actif mobile de l'outil à la gâchette de commande.

On précise que si l'on a illustré, à titre d'exemple, un sécateur comportant une seule lame mobile, l'invention est également applicable aux outils comprenant deux lames de coupe ou autres organes actifs mobiles, moyennant une simple adaptation de la tête de travail de ces outils.

D'autre part, le dispositif d'asservissement en position peut être utilisé en combinaison avec d'autres systèmes de transmission ou de transformation de mouvement connus tels que : engrenage, bielle-manivelle, came, etc.

**Revendications**

1. Outil électrique portable tel que, par exemple, cisaille à tôle, ou sécateur utilisable en agriculture, arboriculture, viticulture ou horticulture, pour travaux de taille et/ou de récolte, comportant au moins un organe actif articulé (4) tel que, par exemple, une lame de coupe, disposé à l'extrémité antérieure d'un corps évidé (1) dont une partie (1a) forme la poignée dudit outil et à l'intérieur duquel sont logés un moteur électrique (5) et un réducteur de vitesse (6) dont la sortie est reliée audit organe actif articulé (4) par l'intermédiaire d'un système de transmission (7-8-9) comportant une pièce mobile d'entraînement (8), ledit outil comprenant encore une gâchette (15) accessible à l'extérieur dudit corps (1) et un dispositif de commande électrique ou électronique (18-19-20) actionné par cette dernière, caractérisé en ce que la pièce mobile d'entraînement (8) de l'organe actif articulé (4) dudit outil, est constituée par l'écrou (8) d'un système vis-écrou à billes (7-8) accouplé audit organe actif, par exemple par l'intermédiaire de biellettes (9).

2. Outil électrique portable selon la revendication 1, caractérisé en ce que la pièce mobile d'entraînement (8) est limitée, dans sa course de translation de va-et-vient, par un dispositif électrique ou électronique de butées (18-20), agissant directement ou indirectement sur le moteur.

3. Outil électrique portable suivant l'une des revendications 1 ou 2, caractérisé en ce que la gâchette (15) et ledit dispositif de commande électrique ou électronique (18-19-20) sont assujettis à la pièce mobile d'entraînement (8) de l'organe actif mobile (4), dont elles suivent les déplacements, et peuvent occuper différentes positions relatives, de sorte que tout mouvement autorisé de la gâchette (15) dans un sens ou dans l'autre, à partir d'une position neutre quelconque, provoque l'actionnement dudit dispositif de commande assurant la mise en marche du moteur électrique (5) et le déplacement de l'ensemble: pièce mobile d'entraînement (8) - gâchette (15) dispositif de commande (18-19-20) qui peut ensuite se replacer automatiquement dans une position neutre lorsque la gâchette (15) est immobilisée par les butées de fin de course (1c, 1d) ou manuellement.

4. Outil électrique portable selon les revendications 2 et 3, caractérisé en ce que le dispositif électrique ou électronique de butées selon la revendication 2 et le dispositif de commande électrique ou électronique suivant la revendication 3, sont constitués par un seul et même dispositif (18-19-20).

5. Outil électrique portable, suivant l'une des revendications 3 ou 4, caractérisé en ce qu'il comporte des butées (1c, 1d) limitant la translation de la gâchette (15) dans les deux directions.

6. Outil électrique portable selon la revendication 5, caractérisé en ce que lesdites butées sont constituées par les bords avant (1c) et arrière (1d) de l'ouverture (1b) dans laquelle peut se déplacer ladite gâchette.

7. Outil électrique portable, selon l'une quelconque des revendications 1 à 6, caractérisé en ce que le dispositif électrique de commande (18-19-20) comprend un tiroir de commande magnétique mobile (18) actionné par la gâchette (15) et au moins un capteur (20) disposé fixement à proximité dudit tiroir magnétique.

8. Outil électrique portable selon la revendication 7, caractérisé en ce que le tiroir magnétique de commande (18) est muni de deux aimants (S, N) inversement orientés et dont les champs magnétiques sont perpendiculaires au capteur (20).

9. Outil électrique portable à asservissement en position selon l'une des revendications 7 ou 8, caractérisé en ce que le capteur (20) est un capteur à effet Hall.

10. Outil électrique portable suivant l'une quelconque des revendications 7 à 9, caractérisé en ce que le tiroir de commande magnétique (18) est logé dans une chambre (17) disposée parallèlement ou sensiblement parallèlement à l'axe de la vis tournante (7) du système vis-écrou à billes (7–8), une ouverture étant ménagée dans la paroi frontale de cette chambre pour le passage de la partie émergeante dudit tiroir de commande magnétique.

11. Outil électrique portable selon la revendication 10, caractérisé en ce que l'extrémité arrière du tiroir de commande (18) est calée contre un ressort de compression (19) tendant à repousser ledit tiroir (18) en direction de la gâchette (15).

12. Outil électrique portable, selon la revendication 1, caractérisée en ce que la vis (7) du système vis-écrou à billes (7, 8) est guidée par un guide à action radiale et axiale (12, 13).

13. Outil électrique portable, suivant la revendication 12, caractérisé en ce qu'un roulement constitué, de préférence, par un roulement à aiguilles (12), est disposé autour de la partie postérieure de la vis (7) du système vis-écrou à billes (7–8).

14. Outil électrique portable selon l'une des revendications 12 ou 13, caractérisé en ce que des butées constituées, de préférence, par des butées à aiguilles (13), sont disposées autour de la partie postérieure de la vis (7) du système vis-écrou à billes (7–8).

**Claims**

1. Portable electric tool such as, for example, a plate shear or secateur used in agriculture, arboriculture, viticulture or horticulture, for cutting and/or harvesting work, comprising at least one articulated active element (4) such as, for example, a cutting blade, placed at the front extremity of a hollow housing (1) of which one part (la) forms the handle of the tool and inside which are housed an electric motor (5) and a speed reducer (6) whose output is linked to the said articulated active element (4) through a transmission system (7–8–9), comprising a mobile driving piece, (8), the tool comprising furthermore a trigger (15) accessible from the outside of the housing (1) and an electrical or electronic control device (18–19–20) activated by the latter, characterized by the fact that the mobile driving piece (8) of the articulated active element (4) of the tool is the nut of a ballscrew-nut system (7–8) coupled to the said active element, through the intermediary of rockers (9) for example.

2. Portable electric tool according to claim 1, characterized by the fact that the mobile driving piece is limited in its toand-fro movement by, an electrical or electronic system of stops (18-20), acting directly or indirectly on the motor.

3. Portable electric tool according to claims 1 or 2, characterized by the fact that the trigger (15) and the electrical or electronic control device (18–19–20) are fastened to the mobile driving piece (8) of the mobile active element (4), whose movements they follow, and they can occupy different relative positions, such that any movement authorized by the trigger (15) in either direction from any neutral position causes the activation of the control device, putting the electric motor (5) into operation and the movement of the assembly comprising: the mobile driving piece (8) – trigger (15) – control device (18–19–20) – which can subsequently revert to a neutral position when the trigger (15) is immobilized by the limit stops (1c, 1d) or manually.

4. Portable electric tool according to claims 2 or 3, characterized by the fact that the electrical or electronic stopping device according to claim 2 and the electrical or electronic control device according to claim 3 consist of one and the same device (18–19–20).

5. Portable electric tool according to claims 3 or 4, characterized by the fact that it comprises stops (1c, 1d) limiting the movement of the trigger (15) in either direction.

6. Portable electric tool according to claim 5, characterized by the fact that the stops consist of the front (1c) and rear (1d) of the opening in which the trigger moves.

7. Portable electric tool according to any of claims 1 to 6, characterized by the fact that the electrical control device (18–19–20) comprises a mobile magnetic control slide (18) activated by, the trigger (15) and at least one sensor (20) placed in a fixed position near the magnetic slide.

8. Portable electric tool according to claim 7, characterized by the fact that the magnetic control slide (18) has two inversely orientated magnets (S, N) whose magnetic fields are perpendicular to the sensor (20).

9. Portable electric tool with automatic position control according to claim 7 or 8, characterized by, the fact that the sensor (20) is a Hall effect sensor.

10. Portable electric tool according to any of claims 7 to 9, characterized by the fact that the magnetic control slide (18) is housed in a chamber (17) arranged parallel or approximately parallel to the axis of the rotating screw (7) of the ballscrew-nut system (7–8), with an opening in the front wall of this chamber for the passage of the emerging part of the magnetic control slide.

11. Portable electric tool according to claim 10, characterized by the fact that the rear extremity of the control slide (18) is fixed against a compression spring (19), tending to press the slide (18) back in the direction of the trigger (15).

12. Portable electric tool according to claim 1, characterized by the fact that the screw (7) of the ballscrew-nut system (7, 8) is guided by a radially and axially acting guide (12, 13).

13. Portable electric tool according to claim 12, characterized by the fact that a bearing, preferably a needle roller bearing (12), is fitted around the rear part of the screw (7) of the ballscrew-nut system (7, 8).

14. Portable electric tool according to claim 12 or 13, characterized by the fact that stops, preferably pin stops (13) are fitted around the rear part of the screw (7) of the ballscrew-nut system (7, 8).

**Patentansprüche**

1. Tragbares elektrisches Werkzeug zum Schneiden z.B. Blechsere, Garten- oder Baumschere, verwendbar in der Landwirtschaft, Fortwirtschaft, im Wein- und im Gartenbau für Schneid- und/oder Erntearbeiten, mit mindestens einem aktiven schwenkbaren Arm (4), z.B. einer Schneidklinge, die an dem vorderen Ende eines hohlen Körpers (1) angeordnet ist, von dem ein Teil (1a) den Handgriff des Werkzeugs bildet, und in dessen Innerem ein Elektromotor (25) und ein Reduktionsgetriebe (6) eingesetzt sind, wobei das aktive schwenkbare Organ (4) mit dem Ausgang des Getriebes unter Zwischenschaltung eines Übertragungssystems (7–8–9) verbunden ist, das ein bewegliches Antriebsteil (8) aufweist, und wobei das Werkzeug noch einen Betätigungsorgan (15) besitzt, der außerhalb des Körpers (1) zugänglich ist und mit einer elektrischen oder elektronischen Steueranordnung (18–19–20), die durch letzteres aktiviert wird, dadurch gekennzeichnet, daß das bewegliche Antriebsteil (8) des aktiven schwenkbaren Organs (4) des Werkzeugs von einer Gewindemutter (8) eines Schrauben-Mutter-Kugel-Systems gebildet wird, das mit dem aktiven Organ gekoppelt ist, z.B. unter Zwischenschaltung von Schwingarmen (9).

2. Tragbares elektrisches Werkzeug nach Anspruch 1, dadurch gekennzeichnet, daß das bewegliche Antriebsteil (8) in seiner hin- und hergehenden Translationsbewegung durch eine elektrische oder elektronische Anschlagvorrichtung (8–20) begrenzt ist, die unmittelbar oder mittelbar auf den Motor einwirkt.

3. Tragbares elektrisches Werkzeug nach Anspruch 1 oder 2, dadurch gekennzeichnet, daß das Betätigungsorgan (15) und die elektrische oder elektronische Steueranordnung (18–19–20) mit dem beweglichen Antriebsteil (8) des aktiven beweglichen Organs (4) verbunden sind und dessen Verschiebungen sie folgen und unterschiedlichen Relativ-positionen einnehmen können, derart, daß jede von dem Betätigungsorgan (15) in der einen oder der anderen Richtung, ausgehend von einer beliebigen Neutralstellung ermöglichte Bewegung die Aktion der Steueranordnung hervorruft, die das Ingangsetzen des Elektromotors (5) und die Verschiebung der Anordnung: bewegliches Antriebsteil (8) – Betätigungsorgan (15) – Steueranordnung (18–19–20) sicherstellt, die sich dann automatisch in eine Neutralstellung verschieben kann, während das Betätigungsorgan (15) durch die Bahn-Endanschläge (1c, 1d) oder manuell unbeweglich gehalten wird.

4. Tragbares elektrisches Werkzeug nach den Ansprüchen 2 und 3, dadurch gekennzeichnet, daß die elektrische oder elektronische Anschlagvorrichtung nach Anspruch 2 und die elektrische oder elektronische Steueranordnung nach Anspruch 3 von ein und derselben Vorrichtung (18–19–20) gebildet sind.

5. Tragbares elektrisches Werkzeug nach einem der Ansprüche 3 oder 4, gekennzeichnet durch Anschläge (1c, 1d), die die Längsbewegung des Betätigungsorgans (15) in beide Richtungen begrenzen.

6. Tragbares elektrisches Werkzeug nach Anspruch 6, dadurch gekennzeichnet, daß die Anschläge von den vorderen (1c) und hinteren (1d) Rändern der Öffnung (1b) gebildet werden, in welcher das Betätigungsorgan sich verschieben kann.

7. Tragbares elektrisches Werkzeug nach einem der Ansprüche 1 bis 6, dadurch gekennzeichnet, daß die elektrische Steueranordnung (18–19–20) eine beweglichen magnetischen Steuerstößel (18) aufweist, der durch das Betätigungsorgan (15) beaufschlagt wird und zumindest einen in der Nähe des magnetischen Stößels fest fixierte Sensor (20).

8. Tragbares elektrisches Werkzeug nach Anspruch 7, dadurch gekennzeichnet, daß der magnetische Steuerstößel (18) mit zwei entgegengesetzt orientierten Magneten (S, N) ausgestattet ist, deren magnetische Felder senkrecht zum Sensor (20) gerichtet sind.

9. Tragbares elektrisches Werkzeug nach einem der Ansprüche 7 oder 8, dadurch gekennzeichnet, daß der Sensor nach dem Hall-Effekt arbeitet.

10. Tragbares elektrisches Werkzeug nach einem der Ansprüche 7 bis 9, dadurch gekennzeichnet, daß der magnetische Steuerstößel (18) in einer parallel oder im wesentlichen parallel zur Achse der Drehschraube (7) des Schrauben-Mutter-Kugel-Systems (7–8) angeordneten Kammer (17) angeordnet ist, wobei in der Frontwand dieser Kammer für den Durchgang des vorstehenden Teils dieses magnetischen Steuerstößels eine Öffnung ausgebildet ist.

11. Tragbares elektrisches Werkzeug nach Anspruch 10, dadurch gekennzeichnet, daß das rückwärtige Ende des Steuerstößels an einer Druckfeder (19) befestigt ist, die den Stößel (18) in Richtung des Betätigungsorgans (15) drängt.

12. Tragbares elektrisches Werkzeug nach Anspruch 1, dadurch gekennzeichnet, daß die Schraube (7) des Schrauben-Mutter-Kugel-Systems, (7, 8) durch eine Führung mit radialer und axialer Aktion (12, 13) geführt ist.

13. Tragbares elektrisches Werkzeug nach Anspruch 12, dadurch gekennzeichnet, daß ein vorzugsweise durch Nadeln gebildetes Kugellager (12) um den rückwärtigen Teil der Schraube (7) des Schrauben-Mutter-Kugel-Systems (7–8) angeordnet ist.

14. Tragbares elektrisches Werkzeug nach einem der Ansprüche 12 oder 13, dadurch gekennzeichnet, daß vorzugsweise von Nadeln (13) gebildete Anschläge um den rückwärtigen Bereich der Schraube (7) des Schrauben-Mutter-Kugel-System (7–8) herum angeordnet sind.

Fig.1

EP 0 291 431 B1

Fig 2

Fig.4

Fig.3

Fig.5

Fig.6

EP 0 291 431 B1

Fig. 7

EP 0 291 431 B1

Fig.8

Fig. 9

Fig. 10